# EUROPÄISCHE PATENTSCHRIFT

(11) **EP 3 870 886 B1**
(45) Veröffentlichungstag und Bekanntmachung des Hinweises auf die Patenterteilung: **12.07.2023**
(21) Anmeldenummer: 19798535.1
(22) Anmeldetag: 25.10.2019
(51) Int. Cl.: F16K 37/00, F16K 5/06, F16K 27/06, G01F 1/66, G01F 15/00, F16K 31/04

(54) **ABSPERRARMATUR ZUM EINBAU IN EIN LEITUNGSSYSTEM FÜR EIN MEDIUM, INSBESONDERE IN EINE GEBÄUDEINSTALLATION**
SHUT-OFF VALVE FOR INSTALLATION IN A CONDUIT SYSTEM FOR A MEDIUM, ESPECIALLY IN A BUILDING INSTALLATION
ROBINETTERIE D'ARRÊT DESTINÉE À ÊTRE INSTALLÉE DANS UN SYSTÈME DE CONDUITE POUR UN FLUIDE, EN PARTICULIER DANS UNE INSTALLATION DE BÂTIMENT

(30) Priorität: 26.10.2018 EP 18202847
(43) Veröffentlichungstag der Anmeldung: 01.09.2021
(73) Patentinhaber: REHAU Industries SE & Co. KG, 95111 Rehau (DE)
(72) Erfinder: CHRISTOPH, Sven, 91058 Weisendorf/Neuenbürg (DE); MÖCKEL, Tino, 90765 Fürth (DE); PENNEKAMP, Oliver, 45731 Waltrop (DE); TASCHL, Martin, 2070 Mitteretzbach (AT)
(86) Internationale Anmeldenummer: PCT/EP2019/000299
(87) Internationale Veröffentlichungsnummer: WO 2020/083518

(56) Entgegenhaltungen:
- CN-B- 102 789 662
- CN-Y- 2 804 809
- US-A1- 2018 182 228
- US-A1- 2018 291 594
- US-A1- 2018 306 617

## Beschreibung

Die vorliegende Erfindung bezieht sich auf eine Absperrarmatur zum Einbau in ein Leitungssystem für ein Medium, insbesondere in eine Gebäudeinstallation, vorzugsweise in eine wasserführende Gebäudeinstallation, wobei die Absperrarmatur ein Gehäuse mit einem Einlass für zuströmendes Medium und einem Auslass für abströmendes Medium; ein motorbetriebenes Absperrelement; Mittel zur Messung der Strömungsgeschwindigkeit des Mediums zwischen dem Einlass und dem Auslass; und eine mit Signalen von mindestens einem der strömungsmessenden Mittel beaufschlagte Steuerungs- und Auswertungseinheit, die dazu eingerichtet ist, das Absperrelement bei vorgegebenen Werten der Strömungsgeschwindigkeit des Mediums zu schließen und/oder ein Leckage-Warnsignal zu erzeugen, umfasst.

Derartige Absperrarmaturen sind aus dem Stand der Technik, beispielsweise aus DE 20 2014 007 230 U1 bekannt. In der in der DE 20 2014 007 230 U1 beschriebenen Absperrarmatur fungieren eine Turbine und ein Reedkontakt als Mittel zur Messung der Strömungsgeschwindigkeit des Mediums. Um eine Messung der Strömungsgeschwindigkeit des Mediums auch bei einem geringen Durchfluss zu gewährleisten, ist es gemäß der DE 20 2014 007 230 U1 vor der Turbine ein mit einem Bypass versehener Rückflussverhinderer angeordnet, aufgrund dessen Anordnung die Turbine bei geringem Durchfluss seitlich angeströmt wird, so dass die von dem durchströmenden Medium auf die Turbine ausgeübte Kraft größer als bei entsprechender Strömung in Längsrichtung ist, so dass der Anlaufwiderstand der Turbine auch bei kleinen Strömungen überwunden wird. Nachteilig an der in der DE 20 2014 007 230 U1 beschriebenen Absperrarmatur wird gesehen, dass diese, um die Detektion geringer Durchflussmengen zu ermöglichen einen komplexen Aufbau mit Rückflussverhinderer mit Bypass aufweist, mit dem ein nöherer Strömungswiderstand einhergeht, der überwunden werden muss. Darüber hinaus birgt der Einbau einer derartigen Absperrarmatur für den Handwerker die Gefahr, dass die Absperrarmatur versehentlich entgegen der Arbeitsrichtung der Turbine in ein Leitungssystem für ein Medium eingebaut wird und dann ihre Funktion nicht erfüllen kann.

Die US 2018/0306617 A1 offenbart einen Kugelhahn mit Ultraschall-Durchflussmesser. Nachteilig an dieser Lösung sind die beiden Ultraschallreflektoren, die den lichten Querschnitt und damit die Nennweite des Kugelhahns und so den Durchflusskoeffizient Kv erheblich reduzieren. Weiter nachteilig an den beiden Ultraschallreflektoren ist die Erhöhung des Strömungswiderstands und damit der Fließgeräusche des durch den Kugelhahn strömenden Mediums.

Vor diesem Hintergrund liegt der vorliegenden Erfindung die Aufgabe zugrunde, eine Absperrarmatur zum Einbau in ein Leitungssystem für ein Medium zur Verfügung zu stellen, die die Nachteile des Stands der Technik überwindet. Insbesondere soll die erfindungsgemäße Absperrarmatur zum Einbau in ein Leitungssystem einen einfachen Aufbau besitzen, für den Handwerker unkompliziert einbaubar sein und einen reduzierten Inspektions- und Wartungsaufwand erfordern.

Diese und andere Aufgaben werden durch eine Absperrarmatur zum Einbau in ein Leitungssystem für ein Medium mit den Merkmalen des Anspruchs 1 gelöst. Bevorzugte Ausführungsformen der erfindungsgemäßen Absperrarmatur sind in den abhängigen Ansprüchen beschrieben.

Gemäß der vorliegenden Erfindung wurde erkannt, dass auf eine Turbine und einen Reedkontakt als Mittel zur Messung der Strömungsgeschwindigkeit des Mediums, was zudem einen Rückflussverhinderer mit Bypass zur seitlichen Anströmung der Turbine bei geringem Durchfluss in der Absperrarmatur mit sich bringt, verzichtet werden kann, wenn die Strömungsgeschwindigkeit durch die Absperrarmatur mittels Ultraschall bestimmt wird. Die Bestimmung der Strömungsgeschwindigkeit mittels Ultraschall ist über einen weiten Bereich möglich, so dass auch sehr geringe Durchflussmengen mit hinreichender Genauigkeit bestimmbar sind. Dadurch ist das teilweise Umleiten des durch die Absperrarmatur strömenden Mediums und dadurch ein komplexerer Aufbau der Absperrarmatur nicht mehr erforderlich. Darüber hinaus kann die Messung der Strömungsgeschwindigkeit mittels Ultraschall unabhängig von der Flussrichtung erfolgen, so dass der Einbau einer solchen Absperrarmatur in ein Leitungssystem für den Handwerker vereinfacht wird. Gemäß der vorliegenden Erfindung wird dies dadurch realisiert, dass in das Gehäuse der Absperrarmatur eine Strömungsmesskammer aufgenommen ist. In und/oder an dieser Strömungskammer sind mindestens eine erste Ultraschallsonde und eine zweite Ultraschallsonde aufgenommen. Diese dienen zur Bestimmung der Strömungsgeschwindigkeit des Mediums durch die Absperrarmatur. Dadurch befinden sich im Strömungsweg des Mediums durch die Absperrarmatur keine beweglichen Teile zur Bestimmung der Strömungsgeschwindigkeit, was den Inspektions- und Wartungsaufwand einerseits und den Druckverlust der Strömung durch die erfindungsgemäße Absperrarmatur andererseits erheblich verringert.

Dementsprechend liegt die vorliegende Erfindung in der Bereitstellung einer Absperrarmatur zum Einbau in ein Leitungssystem für ein Medium, insbesondere in eine Gebäudeinstallation, vorzugsweise in eine wasserführende Gebäudeinstallation, wobei die Absperrarmatur ein Gehäuse mit einem Einlass für zuströmendes Medium und einem Auslass für abströmendes Medium; ein motorbetriebenes Absperrelement; Mittel zur Messung der Strömungsgeschwindigkeit des Mediums zwischen dem Einlass und dem Auslass, die eine in dem Gehäuse aufgenommene Strömungsmesskammer umfassen; und eine mit Signalen von mindestens einem der strömungsmessenden Mittel beaufschlagte Steuerungs- und Auswertungseinheit, die dazu eingerichtet ist, das Absperrelement bei vorgegebenen Werten der Strömungsgeschwindigkeit, Durchflussmenge und/oder Strömungsdauer des Mediums zu schließen und/oder ein Leckage-Warnsignal zu erzeugen, umfasst, wobei sich die Absperrarmatur erfindungsgemäß dadurch auszeichnet, dass die Mittel zur Messung der Strömungsgeschwindigkeit des Mediums weiter mindestens eine erste Ultraschallsonde und eine zweite Ultraschallsonde umfassen, die in oder an dem Gehäuse aufgenommen sind.

Das Gehäuse der erfindungsgemäßen Absperrarmatur umfasst damit als Mittel zur Messung der Strömungsgeschwindigkeit des Mediums mindestens eine erste Ultraschallsonde und eine zweite Ultraschallsonde, die in oder an einer in dem Gehäuse aufgenommenen Strömungsmesskammer angeordnet sind. So wird in der Strömungsmesskammer vorzugsweise eine Strömungsmessstrecke gebildet, an deren Enden die erste Ultraschallsonde und die zweite Ultraschallsonde einander gegenüberliegend angeordnet sind. Von der ersten und zweiten Ultraschallsonde können Ultraschallwellen jeweils ausgesendet und empfangen werden. Über die Laufzeitdifferenz der Ultraschallwellen von der sendenden zur empfangenden Ultraschallsonde zwischen zwei Messungen, nämlich einer Messung in Strömungsrichtung und einer Messung gegen die Strömungsrichtung, kann die Steuerungs- und Auswertungseinheit die Strömungsgeschwindigkeit und damit die Durchflussmenge des die erfindungsgemäße Absperrarmatur durchströmenden Mediums berechnen. Der grundsätzliche Aufbau und die Funktionsweise einer solchen Ultraschall-Messvorrichtung mit einer entsprechenden Messkammer ist in der EP 2 594 908 A1 beschrieben, auf die in Bezug auf den Aufbau und die Funktionsweise einer solchen Ultraschall-Messvorrichtung explizit Bezug genommen wird. Dabei ist eine lineare, einander gegenüberliegende Anordnung der ersten Ultraschallsonde und der zweiten Ultraschallsonde bevorzugt.

Erfindungsgemäß ist das Absperrelement in der Strömungsmesskammer zwischen der ersten Ultraschallsonde und der zweiten Ultraschallsonde angeordnet.

Durch die Platzierung des Absperrelements in der Messkammer kann erheblich an Baulänge für das Gehäuse der erfindungsgemäßen Absperrarmatur eingespart werden. Dies ermöglicht einen Einbau der erfindungsgemäßen Absperrarmatur auch bei beengten Einbausituationen. Dabei hat es sich als besonders günstig herausgestellt, wenn das Absperrelement in der Strömungsmesskammer im Wesentlichen mittig zwischen der ersten Ultraschallsonde und der zweiten Ultraschallsonde angeordnet ist. Dies ermöglicht ein besonders kurzes Gehäuse für die erfindungsgemäße Absperrarmatur. Alternativ dazu ist es ebenso möglich, wenn das Absperrelement in einem Abstand von 20 % bis 40 % der Länge der Strömungsmesskammer von der ersten Ultraschallsonde oder der zweiten Ultraschallsonde angeordnet ist. Dies ermöglicht eine längere Beruhigungsstrecke zwischen dem Absperrelement und der in Flussrichtung danach angeordneten Ultraschallsonde zum Abbau von Turbulenzen im Medium, die durch Materialübergänge im Bereich des Absperrelements verursacht werden, ohne die Baulänge der gesamten Absperrarmatur zu erhöhen.

Es kann von Vorteil sein, wenn die erste Ultraschallsonde und die zweite Ultraschallsonde vollständig in die Wandung des Gehäuses aufgenommen sind. Eine vorzugsweise im Wesentlichen U-förmige Ausbildung der Strömungsmesskammer und im Wesentlichen parallel direkt gegenüberliegende Anordnung der ersten und der zweiten Ultraschallsonde erlaubt eine Ausführung ohne störende Ultraschallreflektoren im Fluidstrom und ist daher in diesem Zusammenhang besonders bevorzugt. Auf diese Weise wird der lichte Querschnitt in der Strömungsmesskammer und damit die Nennweite der Absperrarmatur nicht beeinträchtigt und so der Durchflusskoeffizient K_{V} nicht eingeschränkt. So wird auch der Strömungswiderstand der Absperrarmatur nicht erhöht und kein zusätzliches Fließgeräusch im durchströmenden Medium hervorgerufen.

Es kann sich auch als günstig erweisen, wenn der Abstand zwischen der ersten Ultraschallsonde und der zweiten Ultraschallsonde im Bereich des 2,5-fachen bis 8-fachen des Durchmessers der Strömungsmesskammer, vorzugsweise im Bereich des 3,5-fachen bis 6-fachen des Durchmessers der Strömungsmesskammer, beträgt. Ein Abstand zwischen der ersten Ultraschallsonde und der zweiten Ultraschallsonde im genannten Bereich gewährleistet eine zuverlässige Bestimmung der Strömungsgeschwindigkeit des Mediums bei gleichzeitiger Optimierung der notwendigen Baulänge.

Es kann auch von Nutzen sein, wenn die Länge der Strömungsmesskammer im Bereich von 70 mm bis 125 mm, vorzugsweise im Bereich von 80 mm bis 110 mm, liegt. Eine Länge der Strömungsmesskammer im genannten Bereich hat sich für die Messung der Strömungsgeschwindigkeit mittels Ultraschall als ausreichend erwiesen und erschwert gleichzeitig den Einbau der erfindungsgemäßen Absperrarmatur auch im Falle beengter Einbausituationen aufgrund der resultierenden Gehäusegröße nicht zu sehr.

Es ist es auch bevorzugt, wenn das Gehäuse spiegelsymmetrisch zu einer Ebene ausgebildet ist, die orthogonal zur Achse der Strömungsmesskammer ist. Dies begünstigt den Wegfall einer Vorzugsrichtung bei der Installation der erfindungsgemäßen Absperrarmatur in das Leitungssystem weiter.

Es kann auch hilfreich sein, wenn das motorbetriebene Absperrelement als motorbetriebener Kugelhahn ausgebildet ist. Ein derartiger motorbetriebener Kugelhahn als motorbetriebenes Absperrelement bietet im Falle eines Defekts einen einfachen Austausch der jeweiligen Bauteile und in der Offenstellung einen zumindest weitestgehend freien Durchgang des Mediums durch das Absperrelement, womit lediglich geringe Druckverluste einhergehen. Darüber hinaus ermöglicht ein derartiger motorbetriebener Kugelhahn ein relativ schnelles Öffnen und/oder Schließen der erfindungsgemäßen Absperrarmatur ohne die Gefahr von Druckstößen überproportional zu erhöhen.

Es kann auch bevorzugt sein, wenn die Steuerungs- und Auswertungseinheit dazu eingerichtet ist, eine Offenstellung und/oder Geschlossenstellung des motorbetriebenen Absperrelements über eine Messung des Motorstroms des Motors des motorbetriebenen Absperrelements zu detektieren. In der Offenstellung und der Geschlossenstellung des motorbetriebenen Absperrelements steigt der Motorstrom jeweils stark an, was zur Bestimmung der Offenstellung und/oder Geschlossenstellung genutzt werden kann. Dabei ist es besonders günstig, wenn die Steuerungs- und Auswertungseinheit dazu eingerichtet ist, bei Detektion der Offenstellung des motorbetriebenen Absperrelements dieses geringfügig, insbesondere um einige Winkelsekunden bis einige Winkelminuten, zu schließen und/oder bei Detektion der Geschlossenstellung des motorbetriebenen Absperrelements dieses geringfügig, insbesondere um einige Winkelsekunden bis einige Winkelminuten, zu öffnen. Dadurch soll ein Verspannen zwischen dem Motor und dem Getriebe des motorbetriebenen Absperrelements, insbesondere des motorbetriebenen Kugelhahns, vermieden werden.

Es hat sich auch als hilfreich erwiesen, wenn die Kugelelemente des Kugelhahns aus einem Kunststoffmaterial oder einer Metalllegierung, vorzugsweise aus bleifreiem Rotguss, Rotguss, entzinkungsbeständigem Messing, bleifreiem Messing (Ecobrass^{®}, Cuphin), Messing oder dergleichen, hergestellt sind. Bei Offenstellung des motorbetriebenen Kugelhahns gelangt das Ultraschallsignal ungehindert von der ersten Ultraschallsonde zur zweiten Ultraschallsonde und zurück, was als Indikator der Offenstellung dienen kann. In Zwischenstellungen des motorbetriebenen Kugelhahns, insbesondere zwischen 10° und 80° kommt es durch Reflexionen zu einer derartigen Abschwächung des Ultraschallsignals, dass dieses nach Aussendung durch die erste Ultraschallsonde nur mit geringer Amplitude durch die zweite Ultraschallsonde empfangen werden kann und umgekehrt. Auf diese Weise kann das Vorliegen einer Zwischenstellung des Kugelhahns detektiert werden. Bei Geschlossenstellung des motorbetriebenen Kugelhahns gelangt das Ultraschallsignal von der ersten Ultraschallsonde durch die geschlossene Kugel zur zweiten Ultraschallsonde und zurück, wobei die Laufzeit und die Amplitude des durch die zweite Ultraschallsonde empfangenen Ultraschallsignals durch die abweichende Schallgeschwindigkeit und -dämpfung durch die geschlossene Kugel verändert ist. Dadurch kann das Ultraschall-Signal auch zur Bestimmung der Offenstellung und/oder der Geschlossenstellung des motorbetriebenen Absperrelements herangezogen und insbesondere auch zwischen Offen- und Geschlossenstellung des motorbetriebenen Kugelhahns unterschieden werden. Besonders vorteilhaft ist der Einsatz einer Kugel aus Polyphenylensulfon PPSU, da sie die Ultraschalllaufzeit und -dämpfung derart beeinflusst, dass die Offen- und Geschlossenstellung des motorbetriebenen Kugelhahns besonders zuverlässig voneinander unterscheidbar sind.

Es kann auch nützlich sein, wenn die Messung der Strömungsgeschwindigkeit des Mediums innerhalb eines Bereichs um eine Mittelachse der Strömungsmesskammer, die höchstens 90 % der Querschnittsfläche der Strömungsmesskammer und bevorzugt höchstens 60 % der Querschnittsfläche der Strömungsmesskammer, entspricht. Dadurch ist gewährleistet, dass die Messung der Strömungsgeschwindigkeit in einem Bereich der Strömungsmesskammer erfolgt, in dem in einem weiten Bereich der Durchflussmengen ein beruhigtes Strömungsprofil vorliegt, in dessen Kernbereich die Messung der Strömungsgeschwindigkeit besonders korrekt erfolgen kann. Da die Strömungsgeschwindigkeit besonders in Fluiden ungleichmäßig über den Querschnitt verteilt ist, kann es zum Erhöhen der Messgenauigkeit nützlich sein, wenn die Steuerungs- und Auswertungseinheit die reduzierte Strömungsgeschwindigkeit im der Ventil- und Kugelwandung zugewendeten, nicht erfassten Bereich der Querschnittsfläche rechnerisch kompensiert.

In bevorzugten Ausführungsformen der erfindungsgemäßen Absperrarmatur ist die Steuerungs- und Auswertungseinheit zum Signalaustausch mit einer Datenverarbeitungsvorrichtung, insbesondere einem PC oder einer Haussteuerungseinheit, vorzugsweise aber einem mobilen Endgerät, insbesondere einer Fernbedienung, einem Smartphone, einem Tablet oder dergleichen, eingerichtet. Der Signalaustausch zwischen der Steuerungs- und Auswertungseinheit der erfindungsgemäßen Absperrarmatur und der Datenverarbeitungsvorrichtung ist bevorzugt derart eingerichtet, dass Signale an die Datenverarbeitungsvorrichtung übermittelt, diese durch die Datenverarbeitungsvorrichtung anzeigbar sind und die erfindungsgemäße Absperrarmatur über die Datenverarbeitungsvorrichtung, beispielsweise über eine geeignete App, bedienbar ist. Dadurch wird eine Kenntnisnahme von Zuständen und Warnsignalen sowie eine Bedienung der erfindungsgemäßen Absperrarmatur auf die Datenverarbeitungsvorrichtung und damit bei Verwendung eines mobilen Endgeräts auch aus der Ferne möglich.

Darüber hinaus kann es günstig sein, wenn die Steuerungs- und Auswertungseinheit dazu eingerichtet ist, bei vorgegebenen Werten der Strömungsgeschwindigkeit, Durchflussmenge und/oder Strömungsdauer des Mediums ein Leckage-Warnsignal an das Mobilgerät zu übermitteln und/oder das Absperrelement bei entsprechender Betätigung des Mobilgeräts zu schließen.

Ebenso kann es sich als hilfreich erweisen, dass die Steuerungs- und Auswertungseinheit dazu ausgebildet ist, das motorbetriebene Absperrelement anzusteuern, wenn das motorbetriebene Absperrelement über einen vorgegebenen Zeitraum, insbesondere einen Tag, nicht betätigt worden ist. Auf diese Weise kann dem eventuellen Auftreten einer Schwergängigkeit des motorbetriebenen Absperrelements, insbesondere des motorbetriebenen Kugelhahns, beispielsweise durch Ablagerungen aus dem Fluid entgegengewirkt werden. In einer möglichen Ausgestaltung erfolgt die Ansteuerung in Form einer vorübergehenden Änderung des Öffnungs- bzw. Schließzustandes des motorbetriebenen Absperrventils. Dabei wird zwar die geöffnete Absperrarmatur vorübergehend geschlossen und damit ein Durchströmen des Mediums verhindert bzw. die geschlossene Absperrarmatur vorübergehend geöffnet und damit ein Ausströmen des Mediums aus dem der Absperrarmatur nachgelagerten Leitungssystem ermöglicht, aber die Steuerungs- und Auswertungseinheit ist in der Lage, die korrekte Funktion des motorbetriebenen Absperrventils durch das Ultraschall-Signal zu überwachen. In einer anderen möglichen Ausgestaltung erfolgt die Ansteuerung in Form einer vorübergehenden teilweisen Betätigung des motorbetriebenen Absperrventils, insbesondere um maximal 1% des Gesamtwegs zwischen der Offen- und der Geschlossenstellung. Dadurch ist es zwar nicht mehr möglich, durch das Ultraschall-Signal die korrekte Funktion des motorbetriebenen Absperrventils zu überwachen, aber die Funktion der Absperrarmatur bleibt während der Ansteuerung weitestgehend unverändert.

Es kann auch von Vorteil sein, wenn die Absperrarmatur weiter einen Temperatursensor umfasst, der zum Signalaustausch mit der Steuerungs- und Auswertungseinheit eingerichtet ist. Durch den Temperatursensor kann die Temperatur des strömenden Mediums ermittelt werden. Die Kenntnis der Mediumtemperatur ermöglicht wiederum eine Temperaturkompensation der gemessenen Laufzeiten, so dass eine genauere Bestimmung der Durchflussmenge möglich wird.

Alternativ oder zusätzlich dazu kann es sich als günstig erweisen, wenn die Absperrarmatur weiter einen Drucksensor umfasst, der zum Signalaustausch mit der Steuerungs- und Auswertungseinheit eingerichtet ist. Ein Drucksensor in der erfindungsgemäßen Absperrarmatur ermöglicht auch die Detektion von Mikroleckagen. Dabei kann es besonders günstig sein, wenn die Absperrarmatur einen zweiten Drucksensor umfasst, der spiegelsymmetrisch zum ersten Drucksensor angeordnet ist. Der spiegelsymmetrisch zum ersten Drucksensor angeordnete zweite Drucksensor gewährleistet wiederum die Unabhängigkeit von der Flussrichtung und trägt dadurch zur einfachen Montage der erfindungsgemäßen Absperrarmatur bei.

Alternativ oder zusätzlich dazu kann es auch von Vorteil sein, wenn die Steuerungs- und Auswertungseinheit dazu eingerichtet ist, die Temperatur des strömenden Mediums aus den Laufzeiten des Ultraschallsignals zwischen der ersten Ultraschallsonde und der zweiten Ultraschallsonde zu ermitteln. Da die Schallgeschwindigkeit des Ultraschallsignals von der Temperatur des durch die erfindungsgemäße Absperrarmatur strömenden Mediums abhängig ist, kann bei Kenntnis des Abstands zwischen der ersten und zweiten Ultraschallsonde die Temperatur des durch die erfindungsgemäße Absperrarmatur strömenden Mediums ermittelt werden.

Die erfindungsgemäße Absperrarmatur sowie einzelne Teile davon können auch zeilenweise oder schichtweise unter Verwendung eines zeilenaufbauenden oder schichtaufbauenden Fertigungsverfahrens (z. B. 3D-Druck) hergestellt werden.

Im Folgenden soll die vorliegende Erfindung unter Bezugnahme auf die in den Figuren dargestellte Ausführungsform im Detail erläutert werden. Dabei zeigen:
- Fig. 1: eine Ansicht einer Ausführungsform einer Absperrarmatur gemäß einer Ausführungsform der vorliegenden Erfindung; und
- Fig. 2: eine Querschnittdarstellung eines Blendrahmens der in Fig. gezeigten erfindungsgemäßen Absperrarmatur.

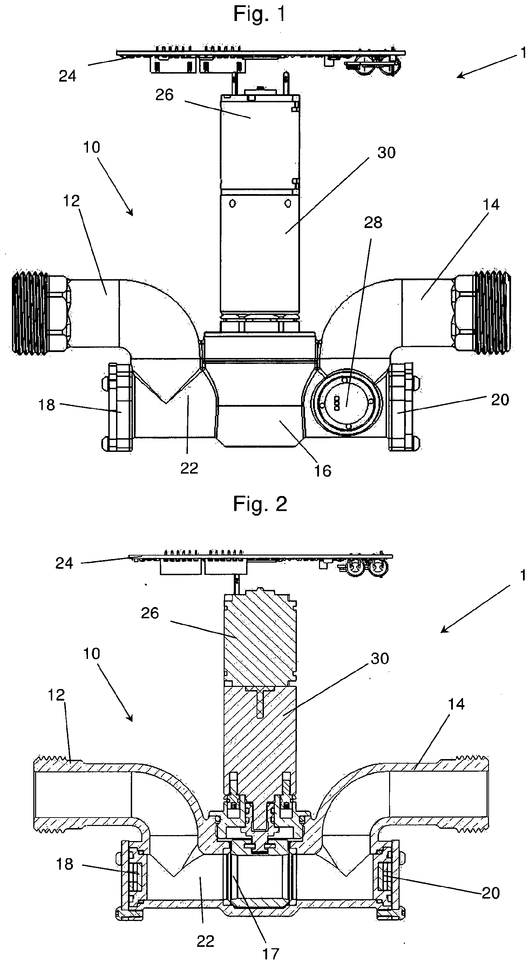

In Fig. 1 ist eine Ausführungsform einer Absperrarmatur 1 zum Einbau in ein Leitungssystem für ein Medium, insbesondere in eine Gebäudeinstallation, vorzugsweise in eine wasserführende Gebäudeinstallation, gemäß einer Ausführungsform der vorliegenden Erfindung in einer Ansicht dargestellt. Die erfindungsgemäße Absperrarmatur 1 umfasst ein Gehäuse 10, ein motorbetriebenes Absperrelement 16, Mittel 18, 20, 22 zur Messung der Strömungsgeschwindigkeit des Mediums zwischen einem Einlass 12 und einem Auslass 14 sowie eine Steuerungs- und Auswertungseinheit 24.

Das Gehäuse 10 ist bevorzugt aus einer Kupferlegierung, vorzugsweise aus bleifreiem Rotguss, Rotguss, entzinkungsbeständigem Messing, bleifreiem Messing (Ecobrass^{®}, Cuphin), Messing oder dergleichen, hergestellt. Neben dem Einlass 12 für zuströmendes Medium und dem Auslass 14 für abströmendes Medium umfasst das Gehäuse 10 eine in dem Gehäuse 10 aufgenommene Strömungsmesskammer 22. Die Strömungsmesskammer 22 ist linear ausgebildet, wobei der Einlass 12 und der Auslass 14 in einem Bogen von ungefähr 90° von oben in die Strömungsmesskammer 22 einmünden, die ein Mittel zur Messung der Strömungsgeschwindigkeit des Mediums durch die erfindungsgemäße Absperrarmatur 1 darstellt. Der Einlass 12 und der Auslass 14 sind jeweils mit dem männlichen Teil eines Schraubgewindes versehen, die zum Anschluss der erfindungsgemäßen Absperrarmatur 1 an das Leitungssystem für ein Medium mittels einer Schraubverbindung dienen. Das Gehäuse 10 ist im Wesentlichen spiegelsymmetrisch zu einer Ebene ausgebildet, die orthogonal zur Längsachse der Strömungsmesskammer 22 ist. Weitere Mittel zur Messung der Strömungsgeschwindigkeit sind eine erste Ultraschallsonde 18 und eine zweite Ultraschallsonde 20. Die erste Ultraschallsonde 18 und die zweite Ultraschallsonde 20 sind in der in Fig.1 in der Wandung des Gehäuses 10 aufgenommen. In alternativen Ausführungsformen können die erste Ultraschallsonde 18 und die zweite Ultraschallsonde 20 auch im Inneren des Gehäuses 10 angeordnet sein. Die erste Ultraschallsonde 18 und die zweite Ultraschallsonde 20 sind an den Enden der Strömungsmesskammer 22 einander gegenüberliegend angeordnet, wobei die Strömungsmesskammer 22 in der dargestellten Ausführungsform der erfindungsgemäßen Absperrarmatur 1 geradlinig verlaufend ausgebildet ist. In anderen Ausführungsform kann die Strömungsmesskammer 22 gewinkelt ausgebildet sein. Dadurch wird zwischen ihnen eine Strömungsmessstrecke gebildet. Zu diesem Zweck senden die erste und die zweite Ultraschallsonde 18, 20 Ultraschallwellen aus, die nach Durchlaufen der Strömungsmesskammer 22 jeweils von der zweiten Ultraschallsonde 20 bzw. der ersten Ultraschallsonde 18 empfangen werden. Die dazu erforderliche Laufzeit der Ultraschallwellen zwischen der ersten Ultraschallsonde 18 und der zweiten Ultraschallsonde 20 wird an die Steuerungs- und Auswertungseinheit 24 übermittelt, die daraus die Strömungsgeschwindigkeit und damit die Durchflussmenge des die erfindungsgemäße Absperrarmatur 1 durchströmenden Mediums berechnet.

Der Durchmesser der Strömungsmesskammer ist über ihre gesamte Länge im Wesentlichen konstant und ohne relevante Querschnittverengung. Dies gilt insbesondere auch im Bereich des motorbetriebenen Absperrelements 16.

Zusätzlich befindet sich am Gehäuse 10 der erfindungsgemäßen Absperrarmatur 1 ein Temperatursensor (nicht abgebildet). Der Temperatursensor ist zum Signalaustausch mit der Steuerungs- und Auswertungseinheit 24 eingerichtet. Die Temperaturbestimmung wird bei der Ermittlung der Strömungsgeschwindigkeit zur Temperarturkompensation herangezogen.

Zusätzlich befindet sich am Gehäuse 10 der erfindungsgemäßen Absperrarmatur 1 ein Drucksensor 28. Der Drucksensor 28 ist zum Signalaustausch mit der Steuerungs- und Auswertungseinheit eingerichtet. Die Druckbestimmung wird zur Ermittlung kleinster Leckagen herangezogen, indem nach dem Schließen des motorbetriebenen Absperrelements 16 der Druckverlauf erfasst wird. Bei abfallendem Druck kann auf eine Mikroleckage geschlossen werden. Zusätzlich zur dargestellten Variante eines einseitigen Drucksensors 28 kann ein zweiter Drucksensor spiegelsymmetrisch an der erfindungsgemäßen Absperrarmatur 1 angeordnet sein, wodurch eine Unabhängigkeit des Einbaus von der Flussrichtung erreicht wird.

Die Steuerungs- und Auswertungseinheit 24 wird so mit Signalen der ersten Ultraschallsonde 18 und der zweiten Ultraschallsonde 20 beaufschlagt, die der Strömungsgeschwindigkeit des die erfindungsgemäße Absperrarmatur 1 durchströmenden Mediums entsprechen. Daraus ermittelt die Steuerungs- und Auswertungseinheit 24 unter Kenntnis des Querschnittes der Absperrarmatur 1 und insbesondere des Absperrelements 16 die Durchflussmenge des die erfindungsgemäße Absperrarmatur 1 durchströmenden Mediums. In einer besonders vorteilhaften Ausgestaltung kompensiert die Steuerungs- und Auswertungseinheit 24 die ungleichmäßige Verteilung der Strömungsgeschwindigkeit über den Querschnitt und erhöht damit die Messgenauigkeit der Erfassung der Durchflussmenge.

Wird ein in der Steuerungs- und Auswertungseinheit 24 vorgegebener Wert der Strömungsgeschwindigkeit des Mediums unterschritten, wird ein Absperrsignal von der Steuerungs- und Auswertungseinheit 24 an das Absperrelement 16 übermittelt. Auf dieses Signal schließt ein Antrieb, der einen Motor 26 und ein Getriebe 30 umfasst, und zum Öffnen und Schließen des motorbetriebenen Absperrelements 16 dient, das Absperrelement 16, so dass der Durchfluss des Mediums durch die erfindungsgemäße Absperrarmatur 1 vollständig unterbrochen ist. Alternativ kann zunächst auch ein entsprechendes Warnsignal, beispielsweise in akustischer oder optischer Form, freigesetzt werden, das dem Benutzer das Schließen der erfindungsgemäße Absperrarmatur 1 nahelegt.

In der in Fig. 1 dargestellten Ausführungsform der erfindungsgemäßen Absperrarmatur 1 ist das motorbetriebene Absperrelement 16 als motorbetriebener Kugelhahn 16 ausgebildet. Wie aus Fig. 1 hervorgeht ist handelt es sich bei dem motorbetriebenen Kugelhahn 16 um einen sog. "Top-Entry"-Kugelhahn, d.h. das Innere des Kugelhahns 16 ist von oben zugänglich und seine Bauteile können ersetzt werden. Die Verwendung eines Kugelhahn 16 als Absperrelement bietet den Vorteil, dass der Kugelhahn 16 in seiner Offenstellung einen zumindest weitestgehend freien Durchgang des Mediums durch das Absperrelement 1 bietet. Dadurch werden durch den Kugelhahn 16 nur geringe Druckverluste verursacht.

Das Absperrelement 16 befindet sich im Wesentlich mittig in der Strömungsmesskammer 22 zwischen der ersten Ultraschallsonde 18 und der zweiten Ultraschallsonde 20. Die symmetrische Anordnung des Absperrelements 16 in der Mitte der Absperrarmatur 1 begünstigt einen Betrieb in beide Flussrichtungen und damit ein Wegfall einer Vorzugsrichtung bei der Installation der erfindungsgemäßen Absperrarmatur in das Leitungssystem. In alternativen Ausführungsformen der erfindungsgemäßen Absperrarmatur 1 kann das Absperrelement 16 auch einen Abstand im Bereich von etwa 20 % bis etwa 40 % der Länge der Strömungsmesskammer 22 von der ersten Ultraschallsonde 18 oder der zweiten Ultraschallsonde 20 aufweisen. Dies ermöglicht eine längere Beruhigungsstrecke zwischen dem Absperrelement 16 und der zweiten Ultraschallsonde 20 zum Abbau von Turbulenzen im Medium, die durch Materialübergänge im Bereich des Absperrelements 16 verursacht werden, ohne die Baulänge der erfindungsgemäßen Absperrarmatur 1 zu erhöhen. Der Abstand zwischen der ersten Ultraschallsonde 18 und der zweiten Ultraschallsonde 20 entspricht in der in Fig. 1 dargestellten Ausführungsform in etwa dem 4,5-fachen des Durchmessers der Strömungsmesskammer 22, kann aber in alternativen Ausführungsformen der erfindungsgemäßen Absperrarmatur 1 im Bereich des 2,5-fachen bis 8-fachen des Durchmessers der Strömungsmesskammer 22 liegen. In der in Fig. 1 dargestellten Ausführungsform ist die Strömungsmesskammer 22 etwa 95 mm lang, wobei die Länge der Strömungsmesskammer 22 aber in alternativen Ausführungsformen der erfindungsgemäßen Absperrarmatur 1 bevorzugt im Bereich von 70 mm bis 125 mm, insbesondere im Bereich von 80 mm bis 110 mm, liegt. Diese relativ kurze Strömungsmesskammer 22 bietet eine kompakte Bauform der erfindungsgemäßen Absperrarmatur 1, wodurch der Einbau der erfindungsgemäßen Absperrarmatur 1 auch bei schwierigen Einbausituationen ermöglicht wird, wobei zusätzlich die Länge der Strömungsmesskammer 22 für die Messung der Strömungsgeschwindigkeit mittels Ultraschall ausreicht. Um eine korrekte Messung der jeweiligen Strömungsgeschwindigkeit, erfolgt die Messung der Strömungsgeschwindigkeit des Mediums im zentralen Bereich um die Mittelachse der Strömungsmesskammer 22. Dabei beträgt dieser zentrale Bereich höchstens 90 % der Querschnittsfläche der Strömungsmesskammer 22 und bevorzugt höchstens 60 % der Querschnittsfläche der Strömungsmesskammer 22. Dadurch ist gewährleistet, dass die Messung der Strömungsgeschwindigkeit in einem Bereich der Strömungsmesskammer 22 erfolgt, in dem über einen weiten Bereich von Durchflussmengen ein beruhigtes Strömungsprofil vorliegt, in dessen Kernbereich die Messung der Strömungsgeschwindigkeit besonders korrekt erfolgen kann.

Die Steuerungs- und Auswertungseinheit 24 erfasst während der Betätigung des motorbetriebenen Absperrventils 16 die Stromstärke des Motorstroms und erkennt daraus, ob sich das motorbetriebene Absperrelement 16 in der Anlaufphase, in der Drehphase in einer Zwischenposition oder in einer Endlage der Geschlossen- oder Offenstellung befindet. Unter Berücksichtigung der Drehrichtung erkennt die Steuerungs- und Auswertungseinheit 24, ob sich das motorbetriebene Absperrelement 16 in einer Offenstellung oder in einer Geschlossenstellung befindet. In einer besonders vorteilhaften Ausgestaltung veranlasst die Steuerungs- und Auswertungseinheit 24, den Motor des motorbetriebenen Absperrelements 16 leicht um einen vorgegebenen Winkel, insbesondere um einige Winkelsekunden bis einige Winkelminuten aus der Endlage der Geschlossenstellung zu öffnen und der Endlage der Offenstellung zu schließen, um eine ständige Einwirkung einer Verwindungskraft auf das Absperrventil 16, den Motor 26 und das Getriebe 30 zu vermeiden. Darüber hinaus speichert die Steuerungs- und Auswertungseinheit 24 Information zu den Zeiten, zu denen das motorbetriebene Absperrelement 16 bewegt wurde. Bleibt das motorbetriebene Absperrelement 16 über einen vorgegeben Zeitraum, beispielweise 24 Stunden, vorzugsweise im Bereich von 12 Stunden bis 36 Stunden, unbewegt, veranlasst die Steuerungs- und Auswertungseinheit 24 eine Bewegung des motorbetriebenen Absperrelements 16, beispielsweise ein einmaliges Schließen und anschließendes Wiederöffnen des motorbetriebenen Absperrelements 16. Dabei wird zwar die geöffnete Absperrarmatur 1 vorübergehend geschlossen, aber die Steuerungs- und Auswertungseinheit 24 ist in der Lage, die korrekte Funktion des motorbetriebenen Absperrventils 16 durch das Ultraschall-Signal zu überwachen. In einer anderen möglichen Ausgestaltung erfolgt die Ansteuerung in Form einer vorübergehenden teilweisen Betätigung des motorbetriebenen Absperrventils 16, insbesondere um maximal 1% des Gesamtwegs zwischen der Offen- und der Geschlossenstellung. Dadurch ist es zwar nicht mehr möglich, durch das Ultraschall-Signal die korrekte Funktion des motorbetriebenen Absperrventils 16 zu überwachen, aber die Absperrarmatur 1 bleibt weitestgehend geöffnet.

Bei Offenstellung des motorbetriebenen Kugelhahns 16 gelangt das Ultraschallsignal ungehindert von der ersten Ultraschallsonde 18 zur zweiten Ultraschallsonde 20 und zurück. In Zwischenstellungen des motorbetriebenen Kugelhahns 16, insbesondere zwischen 10° und 80° kommt es durch Reflexionen zu einer Abschwächung des Ultraschallsignals, dass dieses nach Aussendung durch die erste Ultraschallsonde 18 nur mit geringer Amplitude durch die zweite Ultraschallsonde 20 empfangen werden kann und umgekehrt. Bei Geschlossenstellung des motorbetriebenen Kugelhahns 16 gelangt das Ultraschallsignal von der ersten Ultraschallsonde 18 durch die geschlossene Kugel 17 zur zweiten Ultraschallsonde 20 und zurück, wobei die Laufzeit und die Amplitude des durch die zweite Ultraschallsonde 20 empfangenen Ultraschallsignals durch die abweichende Schallgeschwindigkeit und -dämpfung durch die geschlossene Kugel 17 verändert ist. Die Ausführung gelten für durch die zweite Ultraschallsonde emittierte und von der ersten Ultraschallsonde 18 empfangenen Ultraschallsignale natürlich jeweils entsprechend. Dadurch kann die Steuerungs- und Auswertungseinheit 24 aus der Auswertung des Ultraschallsignals die Stellung des motorbetriebenen Kugelhahns 16 ermitteln und damit unter Korrelation mit dem erfassten Motorstrom auch eine Störung von Motor 26 und Getriebe 30 bzw. dessen Anbindung an den motorbetriebenen Kugelhahn 16 detektieren. Besonders vorteilhaft ist der Einsatz einer Kugel aus Polyphenylensulfon (PPSU), da sie die Ultraschalllaufzeit und -dämpfung derart beeinflusst, dass die Offen- und Geschlossenstellung des motorbetriebenen Kugelhahns besonders zuverlässig voneinander unterscheidbar sind.

Darüber hinaus ist Steuerungs- und Auswertungseinheit 24 und damit die erfindungsgemäße Absperrarmatur 1 mittels eines Mobilgeräts steuerbar, insbesondere mittels einer Fernbedienung, einem Smartphone, einem Tablet oder dergleichen. Dazu ist die Steuerungs- und Auswertungseinheit 24 zum Signalaustausch mit dem Mobilgerät eingerichtet. Dadurch können Informationen zwischen der Steuerungs- und Auswertungseinheit 24 und dem Mobilgerät ausgetauscht werden, beispielsweise Informationen über den Öffnungszustand des motorbetriebenen Absperrelements 16, zur gegenwärtigen Durchflussmenge an Medium durch die erfindungsgemäße Absperrarmatur 1, Befehle zum Öffnen oder Schließen der erfindungsgemäße Absperrarmatur 1 und dergleichen. Die jeweiligen Informationen und/oder Signale können am Mobilgerät angezeigt werden. Dabei verfügt die erfindungsgemäße Absperrarmatur 1 beispielsweise über einen Webserver, über den die Absperrarmatur 1 bedienbar ist. Alternativ ist die Absperrarmatur über eine geeignete, auf dem Mobilgerät installierte App über das Mobilgerät bedienbar.

Zur Warnung des Benutzers vor einer eventuell auftretenden Leckage übermittelt die Steuerungs- und Auswertungseinheit 24 bei vorgegebenen Werten der Strömungsgeschwindigkeit, der Durchflussmenge und/oder der Strömungsdauer des Mediums durch die erfindungsgemäße Absperrarmatur 1 ein Leckage-Warnsignal an das Mobilgerät. Dieser kann dann einen entsprechenden Button in der App betätigen und so das Absperrelement 16 mittels dem Mobilgerät schließen. Alternativ dazu kann die Steuerungs- und Auswertungseinheit 24 bei Erreichen von vorgegebenen Werten der Strömungsgeschwindigkeit, der Durchflussmenge und/oder der Strömungsdauer das Absperrelement 16 automatisch in die Geschlossenstellung überführen.

Die vorliegende Erfindung wurde unter Bezugnahme auf die in den Figuren dargestellte Ausführungsformen des erfindungsgemäßen Verfahrens im Detail erläutert. Es versteht sich, dass die vorliegende Erfindung nicht auf die dargestellten Ausführungsformen beschränkt ist. Der Umfang der vorliegenden Erfindung ergibt sich aus den beigefügten Ansprüchen.

## Patentansprüche

1. Absperrarmatur (1) zum Einbau in ein Leitungssystem für ein Medium, insbesondere in eine Gebäudeinstallation, umfassend:
ein Gehäuse (10) mit einem Einlass (12) für zuströmendes Medium und einem Auslass (14) für abströmendes Medium;
ein motorbetriebenes Absperrelement (16);
Mittel (18, 20, 22) zur Messung der Strömungsgeschwindigkeit des Mediums zwischen dem Einlass (12) und dem Auslass (14), die eine in dem Gehäuse (10) aufgenommene Strömungsmesskammer (22) umfassen; und
eine mit Signalen von mindestens einem der strömungsmessenden Mittel (18, 20, 22) beaufschlagte Steuerungs- und Auswertungseinheit (24), die dazu eingerichtet ist, das Absperrelement (16) bei vorgegebenen Werten der Strömungsgeschwindigkeit, Durchflussmenge und/oder Strömungsdauer des Mediums zu schließen und/oder ein Leckage-Warnsignal zu erzeugen,
wobei die Mittel (18, 20, 22) zur Messung der Strömungsgeschwindigkeit des Mediums weiter mindestens eine erste Ultraschallsonde (18) und eine mindestens zweite Ultraschallsonde (20) umfassen, die in oder an dem Gehäuse (10) aufgenommen sind, und wobei das Absperrelement (16) in der Strömungsmesskammer (22) zwischen der ersten Ultraschallsonde (18) und der zweiten Ultraschallsonde (18) angeordnet ist,
**dadurch gekennzeichnet, dass**
die erste Ultraschallsonde (18) und die zweite Ultraschallsonde (20) entlang der Längsachse der Strömungsmesskammer (22) an den Enden der Strömungsmesskammer (22) einander gegenüberliegend angeordnet sind.

2. Absperrarmatur (1) nach Anspruch 1, **dadurch gekennzeichnet, dass** das Absperrelement (16) in der Strömungsmesskammer (22) im Wesentlichen mittig zwischen der ersten Ultraschallsonde (18) und der zweiten Ultraschallsonde (20) angeordnet ist oder in einem Abstand von 20 % bis 40 % der Länge der Strömungsmesskammer (22) von der ersten Ultraschallsonde (18) oder der zweiten Ultraschallsonde (18) angeordnet ist.

3. Absperrarmatur (1) nach Anspruch 1 oder Anspruch 2, **dadurch gekennzeichnet, dass** die erste Ultraschallsonde (18) und die zweite Ultraschallsonde (20) vollständig in die Wandung des Gehäuses (10) aufgenommen sind.

4. Absperrarmatur (1) nach Anspruch 3, **dadurch gekennzeichnet, dass** die Strömungsmesskammer (22) im Wesentlichen annähernd U-förmig ausgebildet ist, wobei die erste Ultraschallsonde (18) und die zweite Ultraschallsonde (20) bevorzugt im Wesentlichen parallel zu einander ausgerichtet sind.

5. Absperrarmatur (1) nach einem der Ansprüche 1 bis 4, **dadurch gekennzeichnet, dass** der Durchmesser der Strömungsmesskammer (22) im Wesentlichen konstant ist.

6. Absperrarmatur (1) nach einem der Ansprüche 1 bis 5, **dadurch gekennzeichnet, dass** der Abstand zwischen der ersten Ultraschallsonde (18) und der zweiten Ultraschallsonde (20) im Bereich des 2,5-fachen bis 8-fachen des Durchmessers der Strömungsmesskammer (22), vorzugsweise im Bereich des 3,5-fachen bis 6-fachen des Durchmessers der Strömungsmesskammer (22), beträgt.

7. Absperrarmatur (1) nach einem der Ansprüche 1 bis 6, **dadurch gekennzeichnet, dass** die Länge der Strömungsmesskammer (22) im Bereich von 70 mm bis 125 mm, vorzugsweise im Bereich von 80 mm bis 110 mm, liegt.

8. Absperrarmatur (1) nach einem der Ansprüche 1 bis 7, **dadurch gekennzeichnet, dass** das Gehäuse (10) spiegelsymmetrisch zu einer Ebene ausgebildet ist, die orthogonal zur Achse der Strömungsmesskammer (22) ist.

9. Absperrarmatur (1) nach einem der Ansprüche 1 bis 8, **dadurch gekennzeichnet, dass** das motorbetriebene Absperrelement (16) als motorbetriebener Kugelhahn (16) ausgebildet ist, wobei die Kugelelemente des motorbetriebenen Kugelhahns (16) bevorzugt aus einem Kunststoffmaterial hergestellt sind.

10. Absperrarmatur (1) nach einem der Ansprüche 1 bis 9, **dadurch gekennzeichnet, dass** die Steuerungs- und Auswertungseinheit (24) dazu eingerichtet ist, eine Offenstellung und/oder Geschlossenstellung des motorbetriebenen Absperrelements (16) über eine Messung des Motorstroms des Motors (26) des motorbetriebenen Absperrelements (16) zu detektieren.

11. Absperrarmatur (1) nach Anspruch 10, **dadurch gekennzeichnet, dass** die Steuerungs- und Auswertungseinheit (24) dazu eingerichtet ist, bei Detektion der Offenstellung des motorbetriebenen Absperrelements (16) dieses geringfügig, insbesondere um einige Winkelsekunden bis Winkelminuten, zu schließen und/oder bei Detektion der Geschlossenstellung des motorbetriebenen Absperrelements (16) dieses geringfügig, insbesondere um Winkelsekunden bis Winkelminuten, zu öffnen.

12. Absperrarmatur (1) nach einem der Ansprüche 1 bis 11, **dadurch gekennzeichnet, dass** die Messung der Strömungsgeschwindigkeit des Mediums innerhalb eines Bereichs um eine Mittelachse (30) der Strömungsmesskammer (22), die höchstens 90 % der Querschnittsfläche der Strömungsmesskammer (22) entspricht.

13. Absperrarmatur (1) nach einem der Ansprüche 1 bis 12, **dadurch gekennzeichnet, dass** die Steuerungs- und Auswertungseinheit (24) zum Signalaustausch mit einem Mobilgerät eingerichtet ist, wobei die Steuerungs- und Auswertungseinheit (24) vorzugsweise weiter dazu eingerichtet ist, bei vorgegebenen Werten der Strömungsgeschwindigkeit, Durchflussmenge und/oder Strömungsdauer des Mediums ein Leckage-Warnsignal an das Mobilgerät zu übermitteln und/oder das Absperrelement (16) bei entsprechender Betätigung des Mobilgeräts zu schließen.

14. Absperrarmatur (1) nach einem der Ansprüche 1 bis 13, **dadurch gekennzeichnet, dass** die Steuerungs- und Auswertungseinheit (24) dazu ausgebildet ist, das motorbetriebene Absperrelement (16) anzusteuern, wenn das motorbetriebene Absperrelement (16) über einen vorgegebenen Zeitraum, insbesondere einen Tag, nicht betätigt worden ist.

15. Absperrarmatur (1) nach einem der Ansprüche 1 bis 14, **dadurch gekennzeichnet, dass** die Absperrarmatur (1) weiter einen Temperatursensor umfasst, der zum Signalaustausch mit der Steuerungs- und Auswertungseinheit (24) eingerichtet ist, und/oder weiter einen Drucksensor (28) umfasst, der zum Signalaustausch mit der Steuerungs- und Auswertungseinheit (24) eingerichtet ist.

## Claims

1. A shutoff fitting (1) for installation in a conduit system for a medium, in particular in a building installation, comprising:
a housing (10) with an inlet (12) for inflowing medium and an outlet (14) for outflowing medium;
a motor-operated shutoff element (16);
means (18, 20, 22) for measuring the flow rate of the medium between the inlet (12) and the outlet (14), which means comprise a flow measurement chamber (22) accommodated in the housing (10); and
a control and evaluation unit (24), to which signals are supplied from at least one of the flow-measuring means (18, 20, 22) and which is configured to close the shutoff element (16) and/or to generate a leak warning signal at predefined values of the flow rate, flow volume and/or flow duration of the medium,
wherein the means (18, 20, 22) for measuring the flow rate of the medium further comprise at least a first ultrasonic probe (18) and an at least second ultrasonic probe (20), which are accommodated in or on the housing (10), and wherein the shutoff element (16) is arranged in the flow measurement chamber (22) between the first ultrasonic probe (18) and the second ultrasonic probe (18),
**characterised in that**
the first ultrasonic probe (18) and the second ultrasonic probe (20) are arranged opposite one another along the longitudinal axis of the flow measurement chamber (22) at the ends of the flow measurement chamber (22).

2. The shutoff fitting (1) according to Claim 1, **characterised in that** the shutoff element (16) is arranged in the flow measurement chamber (22) substantially centrally between the first ultrasonic probe (18) and the second ultrasonic probe (20) or is arranged at a distance of 20% to 40% of the length of the flow measurement chamber (22) from the first ultrasonic probe (18) or the second ultrasonic probe (18).

3. The shutoff fitting (1) according to Claim 1 or Claim 2, **characterised in that** the first ultrasonic probe (18) and the second ultrasonic probe (20) are completely accommodated in the wall of the housing (10).

4. The shutoff fitting (1) according to Claim 3, **characterised in that** the flow measurement chamber (22) is substantially configured in approximately a U-shape, the first ultrasonic probe (18) and the second ultrasonic probe (20) preferably being oriented substantially parallel to one another.

5. The shutoff fitting (1) according to one of Claims 1 to 4, **characterised in that** the diameter of the flow measurement chamber (22) is substantially constant.

6. The shutoff fitting (1) according to one of Claims 1 to 5, **characterised in that** the distance between the first ultrasonic probe (18) and the second ultrasonic probe (20) is in the range of 2.5 times to 8 times the diameter of the flow measurement chamber (22), preferably in the range of 3.5 times to 6 times the diameter of the flow measurement chamber (22).

7. The shutoff fitting (1) according to one of Claims 1 to 6, **characterised in that** the length of the flow measurement chamber (22) is in the range of 70 mm to 125 mm, preferably in the range of 80 mm to 110 mm.

8. The shutoff fitting (1) according to one of Claims 1 to 7, **characterised in that** the housing (10) is configured with mirror symmetry relative to a plane that is orthogonal to the axis of the flow measurement chamber (22).

9. The shutoff fitting (1) according to one of Claims 1 to 8, **characterised in that** the motor-operated shutoff element (16) is in the form of a motor-operated ball valve (16), the ball elements of the motor-operated ball valve (16) preferably being made from a plastics material.

10. The shutoff fitting (1) according to one of Claims 1 to 9, **characterised in that** the control and evaluation unit (24) is equipped to detect an open position and/or closed position of the motor-operated shutoff element (16) by way of a measurement of the motor current of the motor (26) of the motor-operated shutoff element (16).

11. The shutoff fitting (1) according to Claim 10, **characterised in that** the control and evaluation unit (24) is configured to close the motor-operated shutoff element (16) slightly, in particular by a few angular seconds to angular minutes, upon detection of the open position thereof, and/or to open the motor-operated shutoff element (16) slightly, in particular by angular seconds to angular minutes, upon detection of the closed position thereof.

12. The shutoff fitting (1) according to one of Claims 1 to 11, **characterised in that** the measurement of the flow rate of the medium within a region around a central axis (30) of the flow measurement chamber (22) which corresponds to no more than 90% of the cross-sectional area of the flow measurement chamber (22).

13. The shutoff fitting (1) according to one of Claims 1 to 12, **characterised in that** the control and evaluation unit (24) is equipped for signal exchange with a mobile device, the control and evaluation unit (24) preferably being further equipped to transmit a leakage warning signal to the mobile device, and/or to close the shutoff element (16) when the mobile device is operated accordingly, at predefined values of the flow rate, flow volume and/or flow duration of the medium.

14. The shutoff fitting (1) according to one of Claims 1 to 13, **characterised in that** the control and evaluation unit (24) is configured to actuate the motor-operated shutoff element (16) if the motor-operated shutoff element (16) has not been operated over a predefined period, in particular a day.

15. The shutoff fitting (1) according to one of Claims 1 to 14, **characterised in that** the shutoff fitting (1) further comprises a temperature sensor, which is equipped for signal exchange with the control and evaluation unit (24), and/or further comprises a pressure sensor (28), which is equipped for signal exchange with the control and evaluation unit (24).

## Revendications

1. Robinetterie d'arrêt (1) destinée à être montée dans un système de conduites pour un milieu, en particulier dans une installation de bâtiment, comprenant :
un boîtier (10) avec une entrée (12) pour un milieu entrant et une sortie (14) pour un milieu sortant ;
un élément d'arrêt (16) motorisé ;
des moyens (18, 20, 22) pour mesurer la vitesse d'écoulement du milieu entre l'entrée (12) et la sortie (14), qui comprennent une chambre de mesure d'écoulement (22) logée dans le boîtier (10) ; et
une unité de commande et d'évaluation (24) pouvant être soumise à l'action de signaux d'au moins un des moyens (18, 20, 22) de mesure de l'écoulement, qui est mise au point pour fermer l'élément d'arrêt (16) à des valeurs spécifiées de la vitesse d'écoulement, du débit et/ou de la durée d'écoulement du milieu et/ou pour générer un signal d'avertissement de fuite,
dans lequel les moyens (18, 20, 22) de mesure de la vitesse d'écoulement du milieu comprennent au moins une première sonde à ultrasons (18) et au moins une deuxième sonde à ultrasons (20), qui sont logées dans ou sur le boîtier (10), et
dans lequel l'élément d'arrêt (16) est disposé dans la chambre de mesure d'écoulement (22) entre la première sonde à ultrasons (18) et la deuxième sonde à ultrasons (18),
**caractérisée en ce que**
la première sonde à ultrasons (18) et la deuxième sonde à ultrasons (20) sont disposées de manière à se faire face l'une l'autre le long de l'axe longitudinal de la chambre de mesure d'écoulement (22) sur les extrémités de la chambre de mesure d'écoulement (22).

2. Robinetterie d'arrêt (1) selon la revendication 1, **caractérisée en ce que** l'élément d'arrêt (16) dans la chambre de mesure d'écoulement (22) est disposé sensiblement au centre entre la première sonde à ultrasons (18) et la deuxième sonde à ultrasons (20) ou est disposé à une distance de 20 % à 40 % de la longueur de la chambre de mesure d'écoulement (22) par rapport à la première sonde à ultrasons (18) ou à la deuxième sonde à ultrasons (18).

3. Robinetterie d'arrêt (1) selon la revendication 1 ou la revendication 2, **caractérisée en ce que** la première sonde à ultrasons (18) et la deuxième sonde à ultrasons (20) sont logées en totalité dans la paroi du boîtier (10).

4. Robinetterie d'arrêt (1) selon la revendication 3, **caractérisée en ce que** la chambre de mesure d'écoulement (22) est réalisée sensiblement approximativement en forme de U, dans laquelle la première sonde à ultrasons (18) et la deuxième sonde à ultrasons (20) sont orientées de manière préférée sensiblement de manière parallèle l'une par rapport à l'autre.

5. Robinetterie d'arrêt (1) selon l'une quelconque des revendications 1 à 4, **caractérisée en ce que** le diamètre de la chambre de mesure d'écoulement (22) est sensiblement constant.

6. Robinetterie d'arrêt (1) selon l'une quelconque des revendications 1 à 5, **caractérisée en ce que** la distance entre la première sonde à ultrasons (18) et la deuxième sonde à ultrasons (20) se situe dans la plage de 2,5 fois à 8 fois le diamètre de la chambre de mesure d'écoulement (22), de préférence dans la plage de 3,5 fois à 6 fois le diamètre de la chambre de mesure d'écoulement (22).

7. Robinetterie d'arrêt (1) selon l'une quelconque des revendications 1 à 6, **caractérisée en ce que** la longueur de la chambre de mesure d'écoulement (22) se situe dans la plage de 70 mm à 125 mm, de préférence dans la plage de 80 mm à 110 mm.

8. Robinetterie d'arrêt (1) selon l'une quelconque des revendications 1 à 7, **caractérisée en ce que** le boîtier (10) est réalisé de manière symétrique en miroir par rapport à un plan qui est orthogonal par rapport à l'axe de la chambre de mesure d'écoulement (22).

9. Robinetterie d'arrêt (1) selon l'une quelconque des revendications 1 à 8, **caractérisée en ce que** l'élément d'arrêt (16) motorisé est réalisé en tant que robinet à boisseau sphérique (16) motorisé, dans laquelle les éléments sphériques du robinet à boisseau sphérique (16) motorisé sont fabriqués de manière préférée à partir d'un matériau en matière plastique.

10. Robinetterie d'arrêt (1) selon l'une quelconque des revendications 1 à 9, **caractérisée en ce que** l'unité de commande et d'évaluation (24) est mise au point pour détecter une position ouverte et/ou une position fermée de l'élément d'arrêt (16) motorisé par l'intermédiaire d'une mesure du courant de moteur du moteur (26) de l'élément d'arrêt (16) motorisé.

11. Robinetterie d'arrêt (1) selon la revendication 10, **caractérisée en ce que** l'unité de commande et d'évaluation (24) est mise au point pour fermer en cas de détection de la position ouverte de l'élément d'arrêt (16) motorisé ce dernier légèrement, en particulier de quelques secondes angulaires à des minutes angulaires et/ou pour ouvrir en cas de détection de la position fermée de l'élément d'arrêt (16) motorisé ce dernier légèrement, en particulier de secondes angulaires à minutes angulaires.

12. Robinetterie d'arrêt (1) selon l'une quelconque des revendications 1 à 11, **caractérisée en ce que** la mesure de la vitesse d'écoulement du milieu à l'intérieur d'une zone autour d'un axe central (30) de la chambre de mesure d'écoulement (22) qui correspond au maximum à 90 % de la surface de section transversale de la chambre de mesure d'écoulement (22).

13. Robinetterie d'arrêt (1) selon l'une quelconque des revendications 1 à 12, **caractérisée en ce que** l'unité de commande et d'évaluation (24) est mise au point pour échanger des signaux avec un appareil mobile, dans laquelle l'unité de commande et d'évaluation (24) est de préférence mise au point par ailleurs pour transmettre un signal d'avertissement de fuite à l'appareil mobile à des valeurs spécifiées de la vitesse d'écoulement, du débit et/ou de la durée d'écoulement du milieu et/ou pour fermer l'élément d'arrêt (16) lors de l'actionnement correspondant de l'appareil mobile.

14. Robinetterie d'arrêt (1) selon l'une quelconque des revendications 1 à 13, **caractérisée en ce que** l'unité de commande et d'évaluation (24) est réalisée pour piloter l'élément d'arrêt (16) motorisé lorsque l'élément d'arrêt (16) motorisé n'a pas été actionné pendant une période de temps prédéfinie, en particulier pendant un jour.

15. Robinetterie d'arrêt (1) selon l'une quelconque des revendications 1 à 14, **caractérisée en ce que** la robinetterie d'arrêt (1) comprend par ailleurs un capteur de température, qui est mis au point pour échanger des signaux avec l'unité de commande et d'évaluation (24), et/ou comprend par ailleurs un capteur de pression (28), qui est mis au point pour échanger des signaux avec l'unité de commande et d'évaluation (24).
